# EUROPEAN PATENT SPECIFICATION

(11) **EP 0 802 486 B1**
(45) Date of publication and mention of the grant of the patent: **22.08.2001**
(21) Application number: 97302708.9
(22) Date of filing: 21.04.1997
(51) Int. Cl.: G06F 13/10, G06F 9/445

(54) **Method of installing a driver program for a computer peripheral device**
Verfahren zur Installierung des Gerätetreibers einer Rechnerperipherie-Einrichtung
Procédé d'installation du driver d'un périphérique d'ordinateur

(30) Priority: 19.04.1996 KR 9611944
(43) Date of publication of application: 22.10.1997
(73) Proprietor: Samsung Electronics Co., Ltd., Suwon-city, Kyungki-do (KR)
(72) Inventor: Lee, Bong-Gi, Kwacheon-city, Kyungki-do (KR)
(74) Representative: Tunstall, Christopher Stephen

(56) References cited:
- IBM TECHNICAL DISCLOSURE BULLETIN, vol. 39, no. 1, 1 January 1996, page 135 XP000556349 "DEVICE DRIVERS VIA THE ACCESS BUS"
- PC MAGAZINE, vol. 14, no. 9, 16 May 1995, NEW YORK US, pages 159-174, XP002036369 JOHN CLYMAN & NICK STAN: "Effortless Upgrades"

## Description

### Background to the Invention

The present invention relates to a method for installing a driver program for a computer peripheral device connected to a computer system.

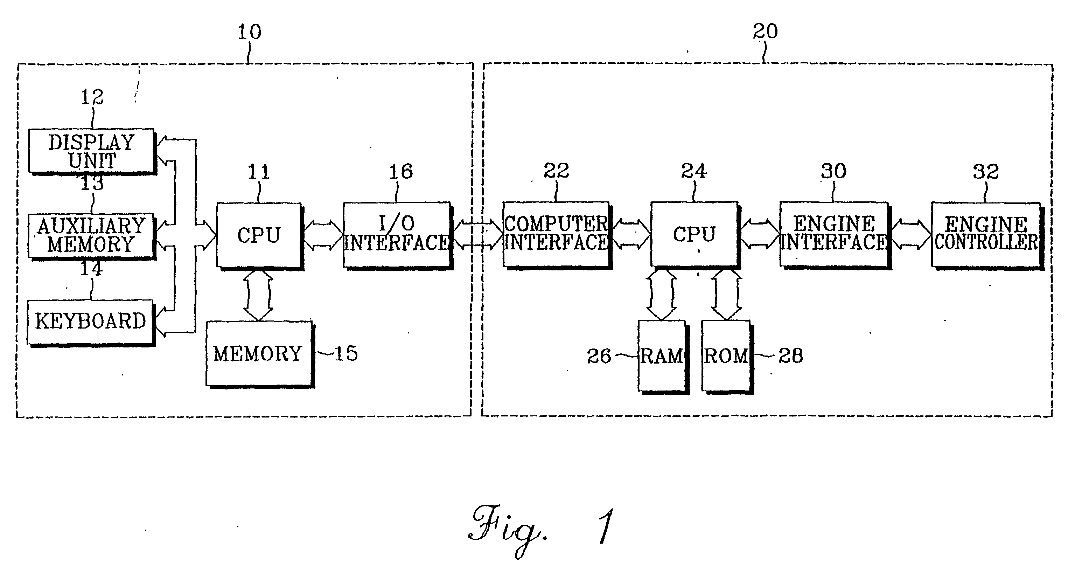

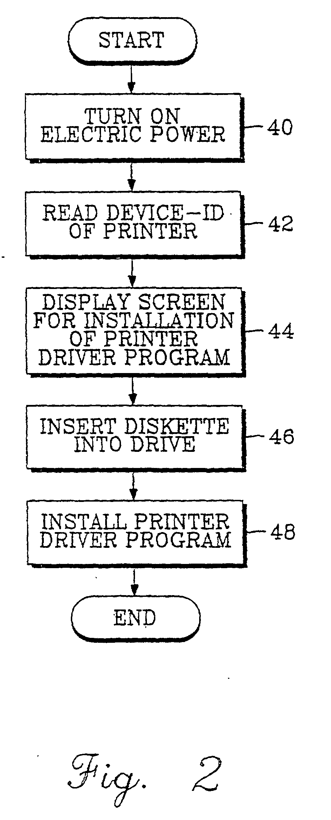

In general, when purchasing a peripheral device such as a printer or a graphics card, a user has to install a driver program that is separately provided by the manufacturer to allow the peripheral device to be used in the computer system. A printer will now be described as an example of a computer peripheral device. With reference to Figs. 1 and 2, the procedure for installing the driver program of the computer peripheral device in the computer system will be explained.

Fig. 1 is a block diagram illustrating the construction of a computer system in which a printer is connected as a computer peripheral device to a computer. Fig. 2 is a flow-chart illustrating the general procedure of installing the printer driver program in memory 15 of the computer.

Firstly, but briefly, a computer 10 of Fig. 1 comprising a display unit 12, an auxiliary memory 13, a keyboard 14 and a main unit has the same construction as that of a conventional computer. The main unit comprises a memory 15, a central processing unit (CPU) 11 and an input/output (I/O) interface 16. The memory 15 comprises a programmable read only memory (programmable ROM) for storing the driver program of the printer 20 and a random access memory (RAM) for temporarily storing various kinds of data generated at the time of a control operation.

The CPU 11 controls the overall operation of the computer according to a given control program, and the I/O interface 16 connected to between the CPU 11 and printer 20 interfaces all kinds of input/output signals. In the meantime, the display unit 12 displays a signal output under control of the CPU 11 and keyboard 14 applies key data signals to the CPU 11 in response to a key input. The auxiliary memory 13 used for the computer system is a conventional hard disk drive.

The printer 20 comprises interfaces 22 and 30, CPU 24, an engine controller 32 and memories 26 and 28. The computer interface 22 connected to the computer 10 and the CPU 24, interface all kinds of input/output signals. The CPU 24 is connected with the ROM 28 having the control program and the RAM 26 for temporarily storing data input through the computer 10. The CPU 24 converts a data code received from the computer interface 22 into image data to be processed by a printer engine, thereby transmitting the converted image data to the engine controller 32. The engine interface 30 interfaces the engine controller 32 with the input/output signal under the control of the CPU 24. The engine controller 32 controls various units under the control of the CPU 24 so that an image corresponding to the given image data can be printed on printing paper.

Referring to Fig. 2, the procedure for installing a printer driver program in the memory 15 of the computer system having the construction as the above will be explained as follows. Firstly, in step 40, the computer and the printer are connected to each other, and the electric power of the computer and the printer is turned on. Then, the MS-Window Program (the printer driver program being discussed is the MS-Window Program) is executed in the computer. At this time, CPU 11 of the computer 10 reads a device identification (ID) of the printer in step 42 and then displays a screen for installation of printer driver program in step 44. Then, in step 46, a diskette having the printer driver program is inserted into a floppy disk drive (FDD) to execute an install program or a set-up program. As a result, the printer driver program is installed in the memory 15 of the computer 10 in step 48.

In an operation as described above, it is difficult for a computer beginner as well as cumbersome for a computer expert to install the printer driver program. Also, there has been a problem in which an error may occur at the time of the installation of the printer driver program. Also, there has been a problem in which the user is prevented from obtaining desired printed documents if a printer driver program of a newly purchased printer is not precisely installed in the computer. On the other hand, to install the printer driver program in a new computer, an install diskette in which the printer driver program is stored should be generally retained. That is, so that a printer may be selectively connected to a computer A or a computer B, the printer driver program executed in the computer A should be required to be installed in the computer B. Therefore, there has been a disadvantage in which the install diskette having the printer driver program provided by the printer maker should generally be retained. Also, since "MS-Window 95" made by Microsoft company as an operating system (OS) has a "MS-Windows 95" driver program for products manufactured by known makers, not products manufactured by new makers or unknown makers, there has been another problem in which the printer driver program should be newly installed.

IBM TECHNICAL DISCLOSURE BULLETIN, vol. 39, no. 1, 1 January 1996, page 135, "Device Drivers via the Access Bus" describes a method of installing device drivers. The device driver software is included in each peripheral, in PROM or similar storage, and at power-on time the software is transferred from the peripheral device to the operating system. Transfer is by a suitable communication channel such as the Intel Universal Serial Bus (USB), or the ACCESS BUS that is now defined by Video Electronics Standards Association (VESA) protocols.

Therefore, it is an object of the present invention to orovide a method for installing a driver program of a computer peripheral device, thus serving users' convenience when installing driver programs of all kinds of computer peripheral devices in a computer.

### Summary of the Invention

To accomplish the above object, the present invention provides a method of installing a driver program for a computer peripheral device in a computer connected to the computer peripheral device comprising:
reading a device identification of the computer peripheral device;
determining whether the said driver program is to be installed;
if so, checking whether or not the said driver program is stored in the computer peripheral device;
if so, reading the said driver program from the computer peripheral device and installing it in the computer; but
if not, outputting a message requesting a user to insert a storage medium on which the said driver program is recorded into a drive; and
reading the said driver program from the storage medium and installing it in the computer.

The driver program may be read from a nonvolatile memory of the computer peripheral device or from a flash memory of the computer peripheral device.

The device identification number of the computer peripheral device is preferably read when power is applied to the computer.

Preferably, whether the said driver program is to be installed is determined by outputting a message requesting a user to indicate whether or not the said driver program is to be installed and awaiting his response.

The computer peripheral device may be a printer.

### Brief Description of the Drawings

The present invention will now be described by way of example with reference to the accompanying drawings in which:
Fig. 1 is a block diagram illustrating the construction of a known printer;
Fig. 2 is a flow-chart illustrating a procedure for installing a printer driver program in memory 15 of the computer;
Fig. 3 is a block diagram illustrating a computer system according to an embodiment of the present invention; and
Fig. 4 is a flow-chart illustrating a printer driver program installation procedure in a computer according to an embodiment of the present invention.

### Detailed Description of the Preferred Embodiment

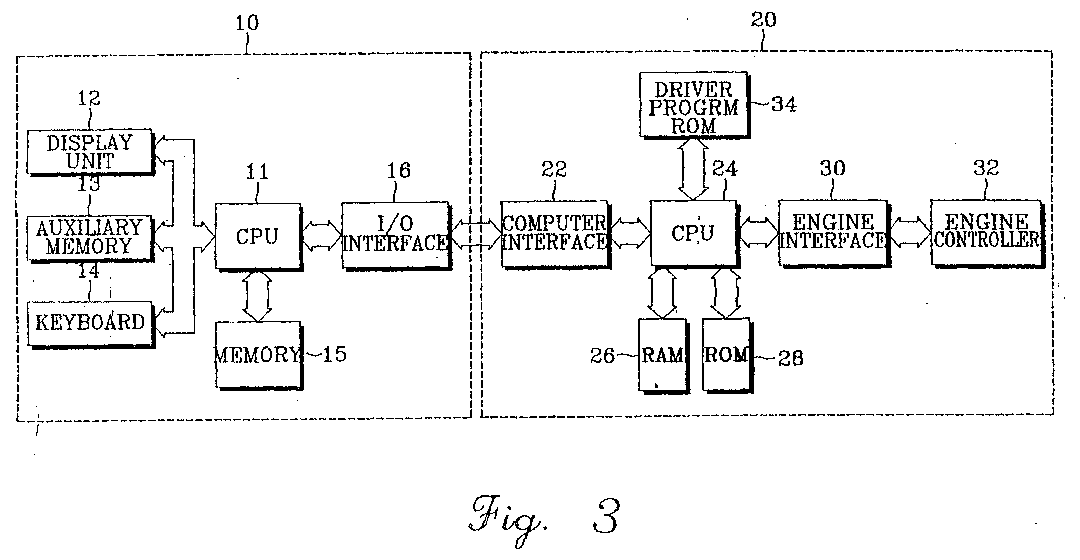

Fig. 3 is a block diagram illustrating the construction of a computer system according to an embodiment of the present invention. The computer 10 of Fig. 3 having a display unit 12, auxiliary memory 13, keyboard 14 and a main unit has the same construction as that of a conventional computer. The main unit comprises the memory 15, the CPU 11 and the I/O interface 16. The memory 15 comprises the programmable ROM for storing the printer driver program and the RAM for temporarily storing various kinds of data generated at the time of the control operation.

The CPU 11 controls the overall operation of the computer according to the given control program. The I/O interface 16 connected between the CPU 10 and the printer 20 and interfaces the input/output signals. The display unit 12 displays a signal output under control of the CPU 11, and the keyboard 14 applies a key data signal corresponding to a key input to the CPU 11. The auxiliary memory 13 is used for the computer system as a conventional hard disk drive. The printer 20 mainly comprises the interfaces 22 and 30, the CPU 24, the engine controller 32 and the memories 26 and 28.

The computer interface 22 connected between the computer 10 and the CPU 24 interfaces all kinds of input/output signals. And, the CPU 24 connected with the ROM 28 having a control program and the RAM 26 for temporarily storing all kinds of data input through the computer 10. And, the CPU 24 converts data code received from the computer interface 22 into image data to be processed by a printer engine, thereby transmitting the converted image data to the engine controller 32. The engine interface 30 interfaces the engine controller 32 with the input/output signal under the control of the CPU 24. The engine controller 32 controls various units under the control of the CPU 24 so that an image corresponding to the given image data can be printed on printing papers. In the meantime, a driver program ROM 34 connected to the CPU 24, has the printer driver program stored in it according to an embodiment of the present invention. At this time, a flash memory may be used for storing the printer driver program.

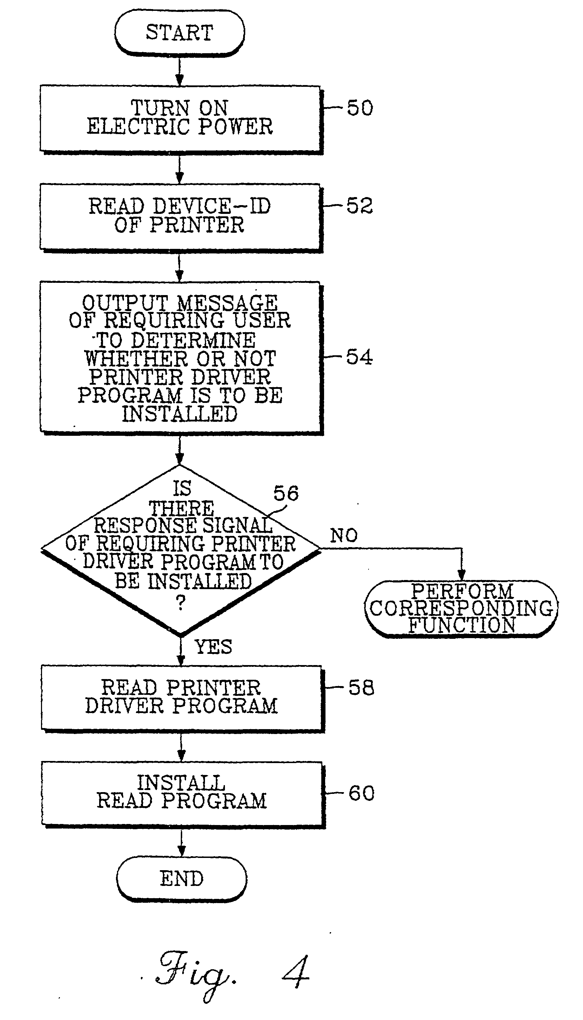

Fig. 4 is a flow-chart illustrating the procedure of installing the printer driver program in a computer according to an embodiment of the present invention. Referring to Figs. 3 and 4, the procedure for installing the printer driver program in the memory 15 of the computer 10 will be described. In the following description, assuming that a user using a computer under "Windows 95" purchases a new printer, the embodiment according to the present invention will be described. Firstly, if the newly purchased printer 20 is connected to the computer 10 and then the electric power is turned on in step 50, the CPU 11 of the computer 10 reads the device-ID of the printer 20 by the OS in step 52. In step 54, the CPU 11 of the computer 10 outputs the message requiring the user to determine whether or not the printer driver program is to be installed through the display unit 12. In step 56, the CPU 11 of the computer 10 checks whether or not there is a response of requiring the printer driver program to be installed through the keyboard 14.

If it is checked that there is the response signal requiring the printer driver program to be installed, step 58 is performed. In step 58, the CPU 11 of the computer 10 reads the printer driver program stored in the driver program ROM 34 within the printer 20 through the I/O interface 16, and then step 60 is performed. In step 60, the CPU 11 of the computer 10 installs the printer driver program read from the printer in the programmable ROM within the memory 15. Thereafter, the CPU 11 of the computer 10 installing the printer driver program controls the printer 20 and transmits data by means of the printer driver program, thus obtaining an image output in response to given transmitted data.

On the other hand, in another embodiment according to the present invention, the printer driver program may be installed in the memory 15 of the computer 10 by using a diskette on which is stored the printer driver program. That is, in the step 56, if it is checked that there is the response signal requiring the printer driver program to be installed, the CPU 11 checks whether or not the printer driver program is installed in the ROMs 28 and 34 in response to the response signal. If it is checked that the printer driver program is installed in the ROMs 28 and 34, steps 58 and 60 are performed, installing the printer driver program. On the other hand, if it is checked that the printer driver program is not installed in ROMs 28 and 34, the CPU 11 outputs a message requesting the diskette in which the printer driver program is installed, to be inserted into the FDD through the display unit 12, and then the printer driver program may be installed through a conventional install operation.

The present invention as explained above, has advantages in that even a computer beginner can easily install the driver program of the computer peripheral device and loss of the diskette, as has happened in the past, can be prevented since the driver program of the computer peripheral device is installed in the peripheral device. Also, there is provided a solution to the problem caused in the computer under the "Microsoft MS-Windows 95" in which the driver program is registered for only the products by the known companies, excluding the products manufactured by new makers or unknown makers.

In the meantime, in accordance with a driver program of the computer peripheral devices such as a monitor, a graphic card, a CD-ROM driver and a Network card can be installed in the computer without any particular modification.

## Claims

1. A method of installing a driver program for a computer peripheral device (20) in a computer (10) connected to the computer peripheral device (20) comprising:
reading a device identification of the computer peripheral device (20);
determining whether the said driver program is to be installed;
if so, checking whether or not the said driver program is stored in the computer peripheral device (20);
if so, reading the said driver program from the computer peripheral device (20) and installing it in the computer (10); but
if not, outputting a message requesting a user to insert a storage medium on which the said driver program is recorded into a drive; and
reading the said driver program from the storage medium and installing it in the computer (10).

2. A method according to claim 1 in which the step of reading the said driver program from the computer peripheral device (20) comprises reading it from a nonvolatile memory (34) of the computer peripheral device (20).

3. A method according to claim 1 in which the step of reading the said driver program from the computer peripheral device (20) comprises reading it from a flash memory (34) of the computer peripheral device (20).

4. A method according to any preceding claim in which the device identification of the computer peripheral device (20) is read when power is applied to the computer (10).

5. A method according to any preceding claim in which whether the said driver program is to be installed is determined by outputting a message requesting a user to indicate whether or not the said driver program is to be installed and awaiting his response.

6. A method according to any preceding claim in which the computer peripheral device (20) is a printer.

## Patentansprüche

1. Verfahren zum Installieren eines Treiberprogramms für ein Computerperipheriegerät (20) in einem Computer (10), der mit dem Computerperipheriegerät (20) verbunden ist, mit:
Lesen einer Geräte-Identifikation des Computerperipheriegerätes (20) ;
Bestimmen, ob das Treiberprogramm zu installieren ist;
wenn ja, dann Überprüfen, ob das Treiberprogramm in dem
Computerperipheriegerät (20) gespeichert ist;
wenn ja, dann Lesen des Treiberprogramms von dem
Computerperipheriegerät (20) und Installieren desselben in dem Computer (10); aber
wenn nicht, dann Ausgeben einer Nachricht, die einen Benutzer auffordert, ein Speichermedium, auf dem das Treiberprogramm aufgezeichnet ist, in ein Laufwerk einzusetzen; und
Lesen des Treiberprogramms von dem Speichermedium und Installieren desselben in dem Computer (10).

2. Verfahren nach Anspruch 1, bei dem der Schritt des Lesens des Treiberprogramms von dem Computerperipheriegerät (20) das Lesen desselben von einem nichtflüchtigen Speicher (34) des Computerperipheriegerätes (20) umfaßt.

3. Verfahren nach Anspruch 1, bei dem der Schritt des Lesens des Treiberprogramms von dem Computerperipheriegerät (20) das Lesen desselben von einem Flash-Speicher (34) des Computerperipheriegerätes (20) umfaßt.

4. Verfahren nach einem der vorhergehenden Ansprüche, bei dem die Geräte-Identifikation des Computerperipheriegerätes (20) gelesen wird, wenn dem Computer (10) Strom zugeführt wird.

5. Verfahren nach einem der vorhergehenden Ansprüche, bei dem bestimmt wird, ob das Treiberprogramm zu installieren ist, indem eine Nachricht ausgegeben wird, die einen Benutzer auffordert, anzugeben, ob das Treiberprogramm installiert werden soll, und dessen Antwort abgewartet wird.

6. Verfahren nach einem der vorhergehenden Ansprüche, bei dem das Computerperipheriegerät (20) ein Drucker ist.

## Revendications

1. Procédé d'installation d'un programme de gestion pour un dispositif (20) périphérique d'ordinateur dans un ordinateur (10) connecté au dispositif périphérique d'ordinateur comportant :
- lire une identification de dispositif du dispositif (20) périphérique d'ordinateur ;
- déterminer si ledit le programme de gestion doit être installé ;
- si oui, vérifier si oui ou non ledit programme de gestion est enregistré dans le dispositif (20) périphérique d'ordinateur ;
- si oui, lire ledit programme de gestion à partir du dispositif (20) périphérique d'ordinateur et l'installer dans l'ordinateur (10) ; mais
- si non, inscrire un message demandant à un utilisateur d'insérer un support d'enregistrement sur lequel ledit programme de gestion est enregistré, dans un lecteur ; et
- lire ledit programme de gestion à partir du support d'enregistrement et l'installer dans l'ordinateur (10).

2. Procédé selon la revendication 1 dans lequel l'étape de lecture dudit programme de gestion à partir du dispositif (20) périphérique d'ordinateur comporte la lecture de celui-ci à partir d'une mémoire (34) non volatile du dispositif (20) périphérique d'ordinateur.

3. Procédé selon la revendication 1 dans lequel l'étape de lecture dudit programme de gestion à partir du dispositif (20) périphérique d'ordinateur comporte la lecture de celui-ci à partir d'une mémoire flash (34) du dispositif (20) périphérique d'ordinateur.

4. Procédé selon l'une quelconque des revendications précédentes dans lequel l'identification de dispositif du dispositif (20) périphérique d'ordinateur est lue quand l'alimentation est appliquée à l'ordinateur (10).

5. Procédé selon l'une quelconque des revendications précédentes dans lequel l'information si ledit programme de gestion doit être installé, est déterminée en inscrivant un message demandant à un utilisateur d'indiquer si oui ou non ledit programme de gestion doit être installé et attendant sa réponse.

6. Procédé selon l'une quelconque des revendications précédentes dans lequel le dispositif (20) périphérique d'ordinateur est une imprimante.
